# EUROPEAN PATENT SPECIFICATION

(11) **EP 2 168 998 B1**
(45) Date of publication and mention of the grant of the patent: **29.02.2012**
(21) Application number: 09011511.4
(22) Date of filing: 08.09.2009
(51) Int. Cl.: C08J 5/18, C08K 3/22, C08K 3/36, C09K 3/10, F16J 15/12, C08L 27/12

(54) **Fluororesin sheet for gasket, method for manufacturing the same, and sheet gasket**
Fluorharzscheibe für Dichtung, Verfahren zu deren Herstellung und Dichtungsscheibe
Feuille de fluororésine pour joint, son procédé de fabrication, et joint plat

(30) Priority: 29.09.2008 JP 2008249828
(43) Date of publication of application: 31.03.2010
(73) Proprietor: Nichias Corporation, Tokyo 105-8555 (JP)
(72) Inventor: Nagase, Yuichiro, Tokyo 105-8555 (JP); Itoi, Katsutoyo, Tokyo 105-8555 (JP); Kawarabayashi, Keiichiro, Tokyo 105-8555 (JP)
(74) Representative: Müller-Boré & Partner Patentanwälte

(56) References cited:
- EP-A- 0 274 010
- US-A- 2 891 921
- US-A- 3 315 020
- DATABASE WPI Section Ch, Week 200827 Thomson Scientific, London, GB; Class A14,page A88, AN 2008-D74460 XP002562250 & JP 2008 007607 A (NIPPON VALQUA IND LTD) 17 January 2008 (2008-01-17)
- DATABASE WPI Week 200482 Thomson Scientific, London, GB; AN 2004-825528 XP002562251 & JP 2004 323717 A (NIPPON VALQUA IND LTD) 18 November 2004 (2004-11-18)

## Description

The present invention relates to a fluororesin sheet used as a base material for gaskets which are used in a wide variety of fields such as petrochemical plants, industrial machines, vehicles, and household appliances.

Generally, a fluororesin sheet for gaskets is a sheet-like material produced by blending a filler with a fluororesin and processing the mixture into the shape of a sheet. Specifically, the fluororesin sheet is manufactured by blending a fluororesin, a filler, and an adjuvant such as a petroleum hydrocarbon solvent, preliminary molding the blend, rolling the pre-molded product several times through a biaxial roll to obtain a sheet, and drying and sintering the sheet.

The fluororesin sheet for gaskets not only has chemical resistance, heat resistance, and non-adhesiveness which are possessed by the fluororesin, but also exhibits improved creep resistance, deficiency of which is a defect of the fluororesin. For this reason, gaskets obtained by punching the fluororesin sheet are widely used as a sealing material for pipes and instruments in petroleum refining plants and petrochemical plants.

In recent years, as a result of the general principle of forbidding use of an asbestos joint sheet, replacing the asbestos joint sheet with a sheet gasket has been studied. For this purpose, it has been necessary to improve stress relaxation property and seal-tightness property at a high temperature of the fluororesin sheet. In addition, in order to prevent fracture and deformation of a gasket, an increase in the tensile strength of the sheet has been desired.

As such a fluororesin sheet, a filler-filled fluororesin sheet obtained by rolling a resin composition comprising a fluororesin, a filler containing 20 wt% or more of silica, and a processing adjuvant which contains 30 mass% or more petroleum hydrocarbon solvent having a fractionation temperature of 120°C or less at a roll temperature of 40 to 80°C is known (JP-A-2008-7607). The filler-filled fluororesin sheet gasket is generally known to improve the stress relaxation property but decline the seal-tightness property with an increase in the amount of fillers. The fluororesin sheet disclosed in JP-A-2008-7607 is provided with characteristics of high stress relaxation property and high seal-tightness property in spite of the low content of the fluororesin and the high filling rate of the fillers by employing a high rolling temperature and using a solvent having a low fractionation temperature as a processing adjuvant.

In the present invention, the smaller the value of "stress relaxation rate" or "stress relaxation %", the better the stress relaxation property and, therefore, the better the performance of the product. The smaller the measured value of "amount of leakage", the better the seal-tightness property and better the performance of the product.

However, since the stress relaxation property, seal-tightness property, and tensile strength of the fluororesin sheet of JP-A-2008-7607 are not necessarily satisfactory, development of a fluororesin sheet for gaskets having further improved characteristics has been desired. In addition, development of a sheet gasket which can be used with an alkaline fluid has been desired.

An object of the present invention is to provide a filler-filled fluororesin sheet for gaskets possessing excellent seal-tightness property and stress relaxation property at a high temperature, a method for manufacturing the same, and a sheet gasket. Another object of the present invention is to provide a fluororesin sheet for gaskets which can seal pipes and the like for a long period of time even if the internal fluid is an alkaline fluid, a method for manufacturing the same, and a sheet gasket.

As a result of extensive studies, the present inventors have found that the seal-tightness property steeply declines when a filler having an average particle diameter of 2 to 30 µm is compounded with the fluororesin in an amount exceeding 46 vol%, and that if the amount of the filler is between 30 and 46 vol%, the seal-tightness property does not decline while maintaining a good stress relaxation property, and further that if 13 vol% or more of alumina is added to the filler, the resulting fluororesin sheet exhibits excellent alkali resistance and remarkably high tensile strength. These findings have led to the completion of the present invention.

Specifically, the present invention has solved the above-described problems by providing a fluororesin sheet for gaskets comprising a fluororesin and a filler having an average particle diameter of 2 to 30 µm, the fluororesin sheet containing the filler in an amount of 30 to 46 vol%, wherein the filler contains 13 vol% or more of alumina.

The present invention further provides a fluororesin sheet gasket obtained by processing the fluororesin sheet for gaskets.

The present invention still further provides a method for manufacturing a fluororesin sheet for gaskets comprising a step of rolling a mixture of a fluororesin, a filler having an average particle diameter of 2 to 30 µm in an amount of 30 to 46 vol%, and an adjuvant which is a petroleum hydrocarbon solvent having a flash point of 40°C or higher, through a biaxial roll several times, a step of drying the rolled sheet, and a step of sintering the dried sheet.

The fluororesin sheet for gaskets and the sheet gasket of the present invention have remarkably excellent seal-tightness and stress relaxing properties. In addition, the fluororesin sheet for gaskets and the sheet gasket have a high tensile strength and can seal pipes for a long period of time even if the internal fluid is alkaline in properties. The method for manufacturing the fluororesin sheet for gaskets of the present invention is safe and can easily control the amount of the processing adjuvant.
Figure 1 is a graph showing the relationship between the amount of PTFE (polytetrafluoroethylene) and the amount of leakage in a reference example.
Figure 2 is a graph showing the relationship between the amount of PTFE and the stress relaxation rate in a reference example.

The fluororesin sheet for gaskets of the present invention comprises a fluororesin and a filler having an average particle diameter of 2 to 30 µm, the fluororesin sheet containing the filler in an amount of 30 to 46 vol%.

The fluororesin is present in the sheet in the form of fiber. Generally known fluororesins can be used. As examples of the fluororesin, a PTFE resin, a modified PTFE, a tetrafluoroethylene-hexafluoropropylene copolymer (FEP), a tetrafluoroethylene-perfluoroalkyl vinyl ether copolymer (PFA), polychlorotrifluoroethylene (PCTEF), polyvinylidene fluoride (PVDF), polyvinyl fluoride (PVF), an ethylene-tetrafluoroethylene copolymer (ETFE), and an ethylene-chlorotrifluoroethylene copolymer (ECTFE) can be given.

The filler is added in order to provide stress relaxation properties and the filler particles with an average diameter of 2 to 30 µm are uniformly present in the fluororesin fibers. The present invention has been achieved based on the findings that a filler with an average particle diameter of 2 to 30 µm exhibits stress relaxation property and seal-tightness property and that the effect is particularly remarkable when the amount of the filler added is in a certain range. If the average particle diameter of the filler is less than 2 µm, the density of the sheet after sintering is low due to the large content of the adjuvant in the rolled sheet. When the average particle diameter of the filler is more than 30 µm, the density of the sheet after sintering is also low due to the increased amount of spaces between the filler particles. The seal-tightness property and stress relaxation property are adversely affected in both cases.

The fluororesin sheet containing a filler of which 90% or more particles have a particle diameter of 2 to 30 µm is preferable. The average particle diameter of the filler is measured using a laser diffraction particle size distribution analyzer by dispersing the particles in an medium, irradiating the dispersed particles with a laser beam, and measuring the intensity distribution of the diffraction light and dispersion light. The particle distribution is calculated by applying the measured results to a formula based on Fraunhofer diffraction theory or the Mie-scattering theory.

The amount of the filler is 30 to 46 vol%. If the amount of the filler in the sheet for gaskets is less than 30 vol%, the stress relaxation property declines; if more than 46 vol%, the seal-tightness property is poor. Although the reason why there are areas with excellent seal-tightness property and areas with poor seal-tightness property when the amount of the filler with an average particle diameter of 2 to 30 µm exceeds 46 vol% is not clear, the pore distribution in the sheet is thought to affect the properties. It is thought that the amount of large pores with poor seal-tightness property increases when the pore distribution reaches 46 vol%.

As the filler containing 13 vol% or more of alumina, a silicate mineral or silica stone which contains, in addition to silicon and aluminum as major components, magnesium, iron, an alkaline earth metal, an alkali metal; naturally-occurring minerals such as wallastonite; oxides such as silica, alumina, glass, zircon, titanium oxide, and iron oxide; zirconium boride; sulfur-containing compounds such as molybdenum disulfide; and carbon can be given. Of these fillers alumina, or a mixture of silica stone and alumina is used.

As an example of silica, a mineral having a composition of 96.85% of SiO₂, 1.55% of Al₂O₃, 0.1% of Fe₂O₃, 0.08% of TiO₂, 0.03% of CaO, 0.01% or less of MgO, 0.06% of Na₂O, 1.04% of K₂O, and 0.15% of other components can be given.

Alumina not only exhibits excellent alkali resistance, but also outstandingly improves the seal-tightness property and tensile strength when contained in the filler in an amount of 13 vol% or more. The reason why the seal-tightness property and tensile strength are remarkably improved by the addition of alumina is that the fluororesin is moderately fibrillated by hard alumina particles during blending, preliminary molding, and press rolling operations. Although α-alumina, β-alumina, and γ-alumina can be used as alumina, α-alumina is preferable because of its chemical stability.

The fluororesin sheet for gaskets of the present invention has remarkably excellent seal-tightness property and stress relaxing properties, and possesses excellent tensile strength. The fluororesin sheet for gaskets of the present invention has a seal-tightness property of 0 to 1.0 cm³/min in terms of the amount of nitrogen gas leakage when measured by the water replacement method, which comprises preparing a sheet with a size conforming to the JIS10K25A flange, clamping the sheet to the flange at a surface pressure of 35 MPa, and loading nitrogen gas at an inner pressure of 0.98 MPa for 10 minutes. The stress relaxation rate at 100°C according to JIS R3453 is 18.0 to 25.0%. The tensile strength according to JIS K7127 (test specimen 5) is 6 MPa or more, and more preferably 16 MPa or more.

Next, the method for preparing the fluororesin sheet for gaskets of the present invention is described. As a method for manufacturing the fluororesin sheet for gaskets of the present invention, a method comprising a step of rolling a mixture of a fluororesin, a filler having an average particle diameter of 2 to 30 µm in an amount of 30 to 46 vol%, and an adjuvant through a biaxial roll several times, a step of drying the rolled sheet, and a step of sintering the dried sheet can be given. A preferable method for manufacturing will be described below.

The same fluororesin as used for the fluororesin sheet for gaskets can be used in the manufacturing method of the present invention. Although a powdered fluororesin may be used, PTFE obtained by emulsion polymerization is preferable due to excellent processability and ease of performing the molding and rolling steps.

The afore-mentioned fillers can be used in the manufacturing method of the present invention. The filler is added in an amount to make the content of the filler in the sheet gasket 30 to 46 vol%. Specifically, when the fluororesin and the filler are used as solid components, the filler is added in an amount to make the content of the filler in the total solid components 30 to 46 vol%. If the filler is added in an amount of 30 to 46 vol% of the total amount of the solid components in the raw material mixing step, the amount of the filler in the finally obtained sheet gasket will be 30 to 46 vol%.

The adjuvant (processing adjuvant) is used in order to swell the fluororesin, form fiber of the fluororesin, and to make the mixing step and the forming step easy. As the adjuvant, a hydrocarbon organic solvent such as a paraffin-based solvent can be used. As commercially-available products, Isopar E, Isopar G, Isopar H, Isopar L, and Isopar M (manufactured by Exxon Mobil Corp.) are known. These adjuvants may be used either individually or in combination of two or more.

A preferable adjuvant is a hydrocarbon-based organic solvent having a flash point of 40°C or more. A hydrocarbon solvent having a flash point of less than 40°C may not assure safety due to the possibility of explosion. In addition, the solvent content of a preliminary molded product may fluctuate when the hydrocarbon solvent is used. The upper limit of the flash point is preferably 60°C. A solvent having too high a flash point is undesirable since drying of a preliminary molded product is retarded. Preferable adjuvants are Isopar G and Isopar H having a flash point of 40 to 60°C.

The adjuvant is usually used in the amount of 1 to 10 times by volume, and preferably 3 to 7 times by volume of the mixture of the fluororesin, the filler, and the adjuvant. Use of the adjuvant in this range ensures production of a homogeneous mixture by stirring and blending in a short period of time, fiber-making of the fluororesin by properly swelling the resin, and smooth implementation of the preliminary molding step and the rolling step.

A preferable fluororesin sheet can be manufactured by a blending step, a preliminary molding step, a rolling step, a drying step, and a sintering step. The blending step is a step of blending the fluororesin, the filler, and the adjuvant by stirring and mixing these components in a mixer. After blending, excessive adjuvant may be removed by filtration or the like.

In the preliminary molding step, the mixture obtained in the blending step is press-molded using a hand-press or the like or extruded to obtain a preliminary molded product. The preliminary molding step is carried out at an ordinary temperature. It is unnecessary to forcibly vaporize the adjuvant. There are no specific limitations to the shape of the preliminary molded product. A plate and a round rod are acceptable.

In the rolling step, the pre-molded product is passed through a biaxial roll several times while changing the mill opening to produce a sheet. Repeated rolling accelerates fiber-making of the fluororesin, densifies the inside structure of the sheet, and increases the tensile strength. Fluororesin fiber-making is further accelerated particularly when a filler containing alumina in an amount of 13 vol% or more is used. The tensile strength of the sheet can be further increased. In addition, the filler is homogeneously dispersed in the fiber, resulting in a sheet with an improved stress relaxation property. The rolling temperature may be room temperature, i.e. between 10 to 30°C. Complete vaporization of the adjuvant is also unnecessary in the rolling step.

In the drying step, the rolled sheet is allowed to stand at a room temperature or heated to a temperature below the boiling point of the adjuvant to remove the adjuvant.

In the sintering step, the dry sheet obtained in the drying step is sintered by heating at a temperature above the melting point of the fluororesin. The sheet must be uniformly heated. Although the heating temperature varies according to the type of the fluororesin, a temperature in a range of 340 to 370°C is suitable.

The fluororesin sheet obtained by the sintering step is processed by punching and the like to produce a gasket sheet. The seal-tightness property, stress relaxation property, and tensile strength of the resulting gasket sheet are the same as those mentioned for the fluororesin sheet. The gasket sheet obtained can be used in a wide variety of fields such as petrochemical plants, various industrial machines, vehicles, and household appliances. The gasket using alumina as the filler can particularly seal pipes and the like for a long period of time even if the internal fluid is alkaline in properties.

The present invention will be described in more detail by examples.

### Reference Example 1

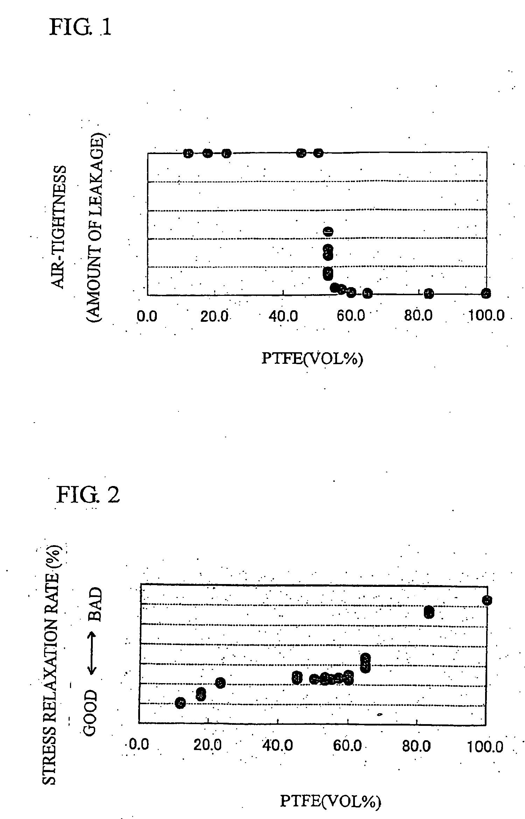

Mixtures of powdered PTFE with a density of 2.2 g/cm³ and a filler with an average particle diameter of 5 micometers and a density of 3.9 g/cm³ at a volume ratio of 100-12 : 0-88.0 were provided. After the addition of Isopar G (flash point: 42°C) in an amount of about 5 times by volume, the mixtures were mixed for 5 minutes using a mixer. After filtration, the mixtures were pressed using a hand press to obtain pre-molds with a size of about 700 mm x 700 mm x 20 mm. The pre-molds were rolled using a biaxial roll with a roll diameter of 610 mm, roll temperature of 20°C, and a roll interval of 10 mm at a speed of 5 m/min. The sheets were prepared while sequentially reducing the roll interval from 10 mm to 5 mm, from 5 mm to 3 mm, and so on until the thickness of the sheet finally reached 1.5 mm. The sheets were allowed to stand for 24 hours at room temperature and, after removing the adjuvant, sintered in an electric furnace at 350°C for three hours to obtain filler-containing fluororesin sheets with a thickness of 1.5 mm. The stress relaxation rate and seal-tightness property of the resulting fluororesin sheets were measured. The results are shown in Tables 1 and 2. The sheets with the same composition were presented in Tables 1 and 2 in order to evaluate reproducibility and repeatability. In addition, the results of seal-tightness property evaluation are shown in Figure 1 and the results of stress relaxation rate evaluation are shown in Figure 2. The "density" in the Tables 1 and 2 indicates the density of the sheets.

### (Measurement of density)

The density was determined according to the method conforming to the A method (water replacement method) of measuring the density and specific gravity of plastic, non-foamed plastic according to JIS K7112.

### (Seal-tightness property test)

For measuring the seal-tightness property, a sheet punched to a size conforming to a JIS10K25A flange was applied to the flange and clamped at a surface pressure of 35 MPa. Then, a nitrogen gas load at an inner pressure of 0.98 MPa was applied for 10 minutes to measure leakage by the water replacement method. The amount of leakage was indicated by cm³/min.

### (Stress relaxation property)

The stress relaxation property was determined by the method of measuring the stress relaxation of a joint sheet at 100°C according to JIS R3453. The stress relaxation is indicated by %.

**TABLE 1**

| No. | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|
| PTFE(VOL%) | 100 | 100 | 83.1 | 83.1 | 64.9 | 64.9 | 64.9 | 64.9 | 60.1 | 60.1 | 57.2 | 57.2 | 55.2 | 55.2 | 53.2 | 53.2 | 53.2 |
| Filler* (VOL%) | 0 | 0 | 16.9 | 16.9 | 35.1 | 35.1 | 35.1 | 35.1 | 39.9 | 39.9 | 42.8 | 42.8 | 44.8 | 44.8 | 46.8 | 46.8 | 46.8 |
| Density g/cm³ | 2.1 | 2.1 | 2.3 | 2.3 | 2.5 | 2.5 | 2.5 | 2.5 | 2.6 | 2.6 | 2.7 | 2.7 | 2.7 | 2.7 | 2.6 | 2.6 | 2.6 |
| Stress relaxation % | 63.3 | 63.3 | 57.7 | 56.1 | 33.6 | 32.5 | 29.7 | 28.4 | 24.9 | 22.2 | 23.4 | 23.1 | 22.5 | 22.8 | 23.5 | 23.7 | 23.0 |
| Amount of leakage (cm³/min.) | 0.1 | 0.0 | 0.1 | 0.0 | 0.1 | 0.0 | 0.0 | 0.0 | 0.2 | 0.1 | 0.4 | 0.3 | 0.5 | 0.5 | 3.3 | 1.5 | 4.5 |

| | | | | | | | | | | | | | | | | | |
|---|---|---|---|---|---|---|---|---|---|---|---|---|---|---|---|---|---|
| * Average particle diameter: 5 µm | | | | | | | | | | | | | | | | | |

**TABLE 2**

| No. | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|
| PTFE(VOL%) | 53.2 | 53.2 | 53.2 | 50.2 | 50.2 | 45.1 | 45.1 | 45.1 | 45.1 | 23.6 | 23.6 | 17.9 | 17.9 | 12.0 | 12.0 |
| Filler* (VOL%) | 46.8 | 46.8 | 46.8 | 49.8 | 49.8 | 54.9 | 54.9 | 54.9 | 54.9 | 76.4 | 76.4 | 82.1 | 82.1 | 88.0 | 88.0 |
| Density g/cm³ | 2.6 | 2.6 | 2.6 | 2.6 | 2.6 | 2.5 | 2.5 | 2.5 | 2.5 | 2.0 | 2.0 | 1.9 | 1.9 | 1.7 | 1.7 |
| Stress relaxation % | 23.3 | 23.2 | 22.0 | 22.5 | 22.9 | 22.5 | 22.9 | 24.5 | 23.5 | 20.8 | 20.3 | 15.8 | 13.8 | 10.6 | 9.8 |
| Amount of leakage (cm³/min.) | 2.8 | 1.7 | 1.3 | >10 | >10 | >10 | >10 | >10 | >10 | >10 | >10 | >10 | >10 | >10 | >10 |

| | | | | | | | | | | | | | | | |
|---|---|---|---|---|---|---|---|---|---|---|---|---|---|---|---|
| * Average particle diameter : 5 µm | | | | | | | | | | | | | | | |

### Reference Example 2

Filler-containing fluororesin sheets with a thickness of 1.5 mm were prepared and evaluated in the same manner as the method of No. 9 and No. 21 of Reference Example 1 except for using a filler with an average particle diameter of 13 micometers and a density of 2.7 g/cm³ instead of the filler with an average particle diameter of 5 micrometers and a density of 3.9 g/cm³. The results are shown in Table 3.

**TABLE 3**

| No. | 33 | 34 |
|---|---|---|
| PTFE (VOL%) | 60.1 | 50.2 |
| Filler* (VOL%) | 39.9 | 49.8 |
| Density g/cm³ | 2.2 | 2.1 |
| Stress relaxation % | 29.0 | 28.0 |
| Amount of leakage (cm³/min.) | 0.3 | >10 |

| | | |
|---|---|---|
| * Average particle diameter : 13µm | | |

As clearly shown in Tables 1 to 3 and Figure 1, the sheet made from 100 vol% of the fluororesin and not containing a filler showed excellent seal-tightness property. When the filler with an average particle diameter of 5 µm or 13 µm was used, the seal-tightness property remarkably declined if the amount of the filler was more than 46 vol% (the amount of the fluororesin is less than 54%) and was very excellent if the amount of the filler was less than 46% (the amount of the fluororesin is more than 54%). It can be seen from Tables 1 to 3 and Figure 2 that the sheet made from a composition having a filler content of 30 vol% or more showed excellent stress relaxation properties. These results show that the fluororesin sheet exhibits excellent seal-tightness property and excellent stress relaxation property at the same time when the filler content is 30 to 46 vol%.

### Example 1

A filler-containing fluororesin sheet with a thickness of 1.5 mm was prepared in the same manner as in the Reference Example 1 except for using a mixture of PTFE and a filler with the volume ratio shown in Table 4 in an amount of 10 kg (before adding an adjuvant). The density, seal-tightness, and stress relaxation properties of the resulting fluororesin sheet were measured according to the above-mentioned methods. In addition, a tensile strength test and an alkali resistant seal-tightness property test were carried out according to the method mentioned below. The results are shown in Table 4.

### (Tensile strength)

The tensile strength was determined by the tensile strength method of plastics (test specimen-type 5) according to JIS K7127.

### (Alkali resistant seal-tightness property)

The alkali resistant seal-tightness property was evaluated by the above seal-tightness property test using a sheet immersed in a 50 wt% sodium hydroxide aqueous solution for seven days.

### Examples 2 to 8 and Comparative Examples 1 to 6

Fluororesin sheets were prepared and evaluated in the same manner as in Example 1, except for using the components in the amount shown in Tables 4 and 5. The results of Examples 2 to 8 are shown in Table 4 and results of Comparative Examples 1 to 6 are shown in Table 5.

**TABLE4**

| Type | | Particle size (µm) | Density (g/cm³) | Example (VOL%) | | | | | | | |
|---|---|---|---|---|---|---|---|---|---|---|---|
| | | | | 1 | 2 | 3 | 4 | 5* | 6* | 7* | 8* |
| PTFE | Product of DuPont | - | 2.2 | 60 | 55 | 65 | 60 | 60 | 60 | 60 | 60 |
| | Alumina (A-42-2: Showa Denko) | 5 | 3.9 | 40 | 45 | 35 | 15 | | | | |
| | Alumina (AL13KT: Showa Denko) | 110 | 3.9 | | | | | | | | |
| | Silica (#100 Maruesu) | 33 | 2.7 | | | | | | | | |
| Filler | Silica (#124 Maruesu) | 13 | 2.7 | | | | 25 | 40 | | | |
| | Silica (#20 Maruesu) | 8 | 2.7 | | | | | | 40 | | |
| | Silica (T200 Maruesu) | 1 | 2.7 | | | | | | | | |
| | Clay (NK300 Showa Chemical) | 9 | 2.6 | | | | | | | 40 | |
| | Barium sulfate (BA: Sakai Kagaku) | 18 | 4.5 | | | | | | | | 40 |
| Adjuvant | Isopar G (Flash point: 42°C) | | | Added | Added | Added | Added | Added | Added | Added | Added |
| Density | | g/cm³ | | 2.7 | 2.6 | 2.7 | 2.6 | 2.2 | 2.2 | 2.1 | 3.1 |
| Tensile strength | | MPa | | 21 | 18 | 22 | 26 | 13 | 15 | 10 | 6 |
| Stress relaxation | | % | | 24 | 22 | 30 | 33 | 29 | 30 | 31 | 24 |
| Amount of leakage | | cm³/min | | 0.0 | 0.0 | 0.0 | 0.0 | 0.3 | 0.3 | 0.2 | 0.0 |
| Amount of leakage (Alkali resistant seal-tightness test) | | cm³/min | | 0.0 | 0.0 | 0.0 | 0.0 | 1.2 | 1.5 | 1.0 | 0.0 |
| Ignitability | | - | | None | None | None | None | None | None | None | None |

| | | | | | | | | | | | |
|---|---|---|---|---|---|---|---|---|---|---|---|
| * not according to the invention. | | | | | | | | | | | |

**TABLE 5**

| Type | | Particle size (µm) | Density (g/cm³) | Comparative Example (VOL%) | | | | | |
|---|---|---|---|---|---|---|---|---|---|
| | | | | 1 | 2 | 3 | 4 | 5 | 6 |
| PTFE | Product of DuPont | - | 2.2 | 75 | 35 | 60 | 60 | 90 | 60 |
| | Alumina (A-42-2: Showa Denko) | 5 | 3.9 | 25 | 65 | | | 10 | |
| | Alumina (AL13KT: Showa Denko) | 110 | 3.9 | | | | | | 40 |
| | Silica (#100 Maruesu) | 33 | 2.7 | | | 40 | | | |
| Filler | Silica (#124 Maruesu) | 13 | 2.7 | | | | | | |
| | Silica (#20 Maruesu) | 8 | 2.7 | | | | | | |
| | Silica (T200 Maruesu) | 1 | 2.7 | | | | 40 | | |
| | Clay (NK300 Showa Chemical) | 9 | 2.6 | | | | | | |
| | Barium sulfate (BA: Sakai Kagaku) | 18 | 4.5 | | | | | | |
| Adjuvant | Isopar G (Flash point: 42°C) | | | Added | Added | Added | Added | Added | Added |
| Density | | g/cm³ | | 2.4 | 2.4 | 2.0 | 1.6 | 2.3 | 2.0 |
| Tensile strength | | MPa | | 29 | 6 | 11 | 6 | 31 | 8 |
| Stress relaxation | | % | | 60 | 23 | 24 | 23 | 65 | 45 |
| Amount of leakage | | cm³/min | | 0.0 | Leaked | Leaked | Leaked | 0.0 | Leaked |
| Amount of leakage (Alkali resistant seal-tightness test) | | cm³/min | | 0.0 | Leaked | Leaked | Leaked | 0.0 | Leaked |
| Ignitability | | - | | None | None | None | None | None | None |

As a result, the fluororesin sheets of Examples 1 to 8 showed better stress relaxation property than the sheet of Comparative Example 1 and better seal-tightness property than the fluororesin sheets of Comparative Examples 2 to 4 and 6. The fluororesin sheets of Examples 1 to 4 containing alumina showed better alkali resistance than the fluororesin sheets of Example 5 to 7 to which fillers other than alumina were added. The fluororesin sheet to which barium sulfate was added showed good alkali resistance as in Example 8, but exhibited poor tensile strength suggesting a possibility of gasket fracture in the case of a high internal pressure. In an experiment in which a fluororesin sheet was prepared in the same manner as in Example 1 except for using Isopar C (flash point: -8°C) instead of Isopar G (flash point: 42°C), the resulting fluororesin sheet showed the same results as in Example 1 in the evaluation of the density, tensile strength, stress relaxation property, seal-tightness property, and alkali resistance, but the sheet was ignited in the ignition test suggesting a possibility of explosion.

## Claims

1. A fluororesin sheet for gaskets comprising a fluororesin and a filler having an average particle diameter of 2 to 30 µm, the fluororesin sheet containing the filler in an amount of 30 to 46 vol%,
wherein the filler contains 13 vol% or more of alumina.

2. A fluororesin sheet gasket obtained by processing the fluororesin sheet for gaskets according to claim 1.

3. A method for manufacturing a fluororesin sheet for gaskets comprising a step of rolling a mixture of a fluororesin, a filler having an average particle diameter of 2 to 30 µm in an amount of 30 to 46 vol%, and an adjuvant through a biaxial roll several times, a step of drying the rolled sheet, and a step of sintering the dried sheet,
wherein the filler contains 13 vol% or more of alumina.

4. The method according to claim 3, wherein the adjuvant is a petroleum hydrocarbon solvent having a flash point of 40°C or more.

## Patentansprüche

1. Fluorharzblatt für Dichtungen, umfassend ein Fluorharz und ein Füllmittel mit einem mittleren Teilchendurchmesser von 2 bis 30 µm, wobei das Fluorharzblatt das Füllmittel in einer Menge von 30 bis 46 Vol.-% enthält, wobei das Füllmittel 13 Vol.-% oder mehr an Aluminiumoxid enthält.

2. Fluorharzdichtungsscheibe, erhalten durch das Verarbeiten des Fluorharzblatts für Dichtungen nach Anspruch 1.

3. Verfahren zur Herstellung eines Fluorharzblatts für Dichtungen, umfassend einen Schritt des mehrmaligen Walzens eines Gemisches aus einem Fluorharz, einem Füllmittel mit einem mittleren Teilchendurchmesser von 2 bis 30 µm in einer Menge von 30 bis 46 Vol.-% und einem Hilfsmittel durch eine biaxiale Walze, einen Schritt des Trocknens des gewalzten Blatts und einen Schritt des Sinterns des getrockneten Blatts, wobei das Füllmittel 13 Vol.-% oder mehr an Aluminiumoxid enthält.

4. Verfahren nach Anspruch 3, wobei das Hilfsmittel ein Erdölkohlenwasserstofflösungsmittel mit einem Flammpunkt von 40°C oder mehr ist.

## Revendications

1. Feuille de fluororésine pour joints comprenant une fluororésine et une charge ayant un diamètre moyen des particules allant de 2 à 30 µm, la feuille de fluororésine contenant la charge en une quantité allant de 30 à 46% en volume, où la charge contient 13% en volume ou plus d'alumine.

2. Joint en feuille de fluororésine obtenue par transformation de la feuille de fluororésine pour joints selon la revendication 1.

3. Procédé de préparation d'une feuille de fluororésine pour joints, comprenant une étape de laminage d'un mélange de fluororésine, d'une charge ayant un diamètre moyen des particules allant de 2 à 30 µm en une quantité allant de 30 à 46% en volume, et d'un adjuvant, par un laminoir biaxial, plusieurs fois, une étape de séchage de la feuille laminée et une étape de frittage de la feuille séchée, où la charge contient 13% en volume ou plus d'alumine.

4. Procédé selon la revendication 3, où l'adjuvant est un solvant hydrocarboné de pétrole ayant un point éclair de 40°C ou plus.
